# EUROPEAN PATENT APPLICATION

(11) **EP 0 549 110 A1**
(43) Date of publication of application: **30.06.1993**
(21) Application number: 92309661.4
(22) Date of filing: 22.10.1992
(51) Int. Cl.: B29B 11/16, B29C 67/14

(54) **Method for producing fiber-reinforced articles**

(30) Priority: 23.12.1991 US 812348
(71) Applicant: FORD MOTOR COMPANY LIMITED, Brentwood Essex (GB); FORD-WERKE AKTIENGESELLSCHAFT, D-50725 Köln (DE); FORD FRANCE S. A., F-92506 Rueil-Malmaison Cédex (FR)
(72) Inventor: Johnson, Carl Frederick, Belleville, Michigan 48111 (US); Chavka, Norman Gerald, Allen Park., Michigan 48101 (US); Czaplicki, Michael Joseph, College Station, Texas 77840 (US)
(74) Representative: Messulam, Alec Moses

(57) **Abstract**

A method of producing an encapsulated preform useful for polymeric moulding, comprising the steps of providing a fiber-clad preform (10); placing the preform (10) in an envelope (16); evacuating the envelope (16); and sealing the envelope (16). The envelope (16) may be made from one or more thin film sheets (18) folded atop one another to contain the preform. The sheet is sealed about its perimeter to define the envelope and contain a space. The envelope (16) may optionally contain a hollow member or tube (20) through the envelope and communicate between the space and a point external to the envelope (16). Vacuum is applied to the member and the space within the envelope (16) is evacuated. A liquid polymeric material is injected through the envelope (16) to impregnate the fibrous layer. The liquid polymeric material may be injected through the optional hollow member or the envelope may be pierced by an injector.

## Description

This invention relates generally to moulding articles, and more particularly to the manufacture of moulded articles containing fiber-reinforcement.

It is useful to provide a preform for liquid moulding such as Polymeric Liquid Composite (PLC) moulding or Resin Transfer Moulding (RTM). A preform is an intermediate to a final moulded article. The preform includes the fibrous reinforcement material generally formed in the shape of the final moulded article. The preform lacks the polymer material which will subsequently be added and become intimate with the fibrous material to render the completed article.

Preforms are useful in assisting the manufacture of moulded articles by permitting the separate manufacture of the preform and moulded article. Preforms are much lighter to transport and lower in cost to produce than the final moulded article.

Previous uses of preforms in liquid moulding included fiber-reinforced articles containing a small quantity of binder or resin material. This binder would permit the preform to generally retain its shape for subsequent injection of the resin material. The preform would then be placed in a mould or tool and a polymeric material injected within the fibrous layer. Depending on the type of polymeric material used, mould release agents were either mixed within the polymeric material or applied to the mould surface to assist in the removal of the final moulded article from the mould. Preforms were also subject to environmental contamination and degradation as well as abrasion and other physical damage.

It is useful to manufacture moulded articles containing fiber-reinforcement material due to their high strength and low weight characteristics. Various shapes, including tubes and plaques, have been moulded using a thin film drawn against the fiber-reinforcement by vacuum. One example is illustrated in U.S. patent 3,962,394 to Hall. The Hall patent teaches the manufacture of a fiber-reinforced composite tube. A cylindrical mandrel is used to provide the interior shape of the tube. A liquid resin impregnated layer of fiber-reinforcement is overlaid the mandrel. The compression sleeve is placed atop the fiber-reinforcement. A bag is placed adjacent the compression sleeve and sealed along the perimeter of the mandrel. The bag is evacuated, compressing the sleeve and fiber-reinforcement material. The article is then placed in an oven and the resin allowed to cure.

Planar objects have been moulded by applying a fiber-reinforcement material adjacent a mould surface as taught in U.S. patent 4,902,215 to Seemann, III. A fluid impervious outer sheet is placed atop the fibrous layer and sealed against the mould surface. A resin inlet through the outer sheet injects resin into the fibrous layer. A vacuum draws the fibrous layer and outer sheet against the mould.

Hall and Seemann both teach a vacuum impervious sheet compressing the fibrous layer against a mould surface. The sheet is sealed against the mould and secured in place by vacuum. In Seemann, resin is injected into the fibrous material through a resin inlet tube. In both instances, the resin material contacts the mould surface.

The present invention provides a method of producing an encapsulated reinforcement preform useful for PLC moulding or RTM. The encapsulated preform may be separately manufactured and shipped for later moulding or for manufacture substantially simultaneously with the final moulded article. The preferred embodiment of the invention teaches a method of producing an encapsulated preform comprising the steps of providing a fiber-clad preform; placing the preform in an envelope; evacuating the envelope; and sealing the envelope. The encapsulated preform may be then manufactured into a fiber-reinforced article by injecting a material into the envelope to impregnate the preform.

The invention produces a preform and a moulded article which is contained within an envelope. The envelope may be made from one or more thin film sheets. The sheets are folded atop one another to contain the preform. The sheet is sealed about its perimeter to define the envelope and contain a space. The envelope may optionally contain a hollow member or tube through the envelope and communicate between the space and a point external to the envelope. Vacuum is applied to the hollow member and the space within the envelope is evacuated. The envelope partially compresses the dry reinforcement preform to define a "net shape". The net shape is the approximate shape of the final moulded article.

The preform is intended for use in a moulding process. The preform is placed within a cavity of a mould and the mould closed. A liquid polymeric material is injected through the envelope and into the space. The liquid polymeric material impregnates the fibrous layer to form the moulded article. The liquid polymeric material may be injected through the optional hollow member or the envelope may be pierced by an injector. The liquid polymeric material need not touch the mould cavity surface. The polymeric material may be completely contained within the envelope.

The invention permits the manufacture of an encapsulated preform in the net shape of the final moulded article. The preform is protected from contamination within a sealed envelope. The preform may be separately manufactured and transported for subsequent moulding.

Moulding may be performed through the envelope so as to prevent polymeric material contact with the mould cavity surface. The envelope material may be selected to provide enhanced functional properties of the final moulded article or to provide a unique surface finish. The envelope may be retained on the article or removed. Because the fibrous material is compressed under vacuum, separate venting during injection moulding may be eliminated.

The invention will now be described further, by way of example, with reference to the accompanying drawings, in which:
Figure 1 is an exploded perspective view of an encapsulated preform according to the present invention.
Figure 2 is a perspective view of an assembled preform.
Figure 3 is a sectional view of a preform taken along the lines 1-1 in Figure 2 and shown within a mould cavity.
Figure 4 is a sectional view of the preform showing in Figure 3 being removed from the mould.

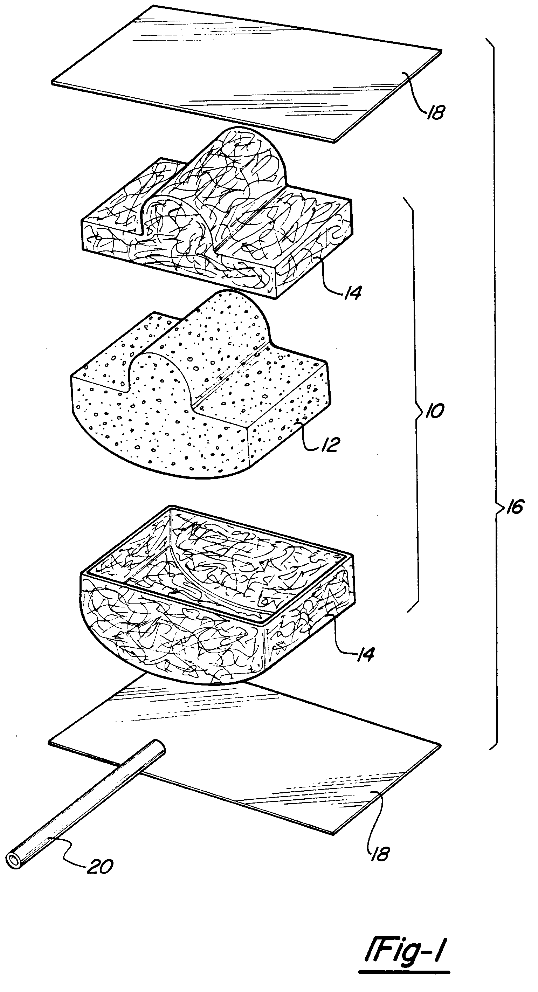

A preform is an intermediate component or assembly useful in the manufacture of a moulded article. A preform for use in resin transfer moulding (RTM) is illustrated in Figure 1. Preforms may be used for other types of moulding, including injection moulding, reaction injection moulding, and compression moulding. Preform 10 contains a rigid core 12. Core 12 is generally made from a preshaped, rigid foam which is lightweight and impervious to resin. Other cores are also useful in RTM, including those made of a hollow, blow-moulded material. Core 12 may be made either structural or nonstructural, or may contain resin transfer conduits to direct liquid resin to various portions of the preform. When manufacturing relatively thin articles, such as sheets or rods, the invention may be practised without a core. In this case, the fibrous layer would be self-supporting or compressed upon itself.

One or more fibrous reinforcement layers 14 are placed adjacent core 12. Fibrous layer 14 may be random or oriented fibers, chopped, spun, woven fibers, non-woven fabric, or flocking. Fibrous layer 14 may include a quantity of binder to assist in retaining a shape or adhering to core 12. Fibrous layer 14 generally completely covers the exterior surface of foam core 12. Fibrous layer 14 may be made of a wide variety of fibrous materials, including glass, aramid and carbon as well as metallic and polymeric fibers.

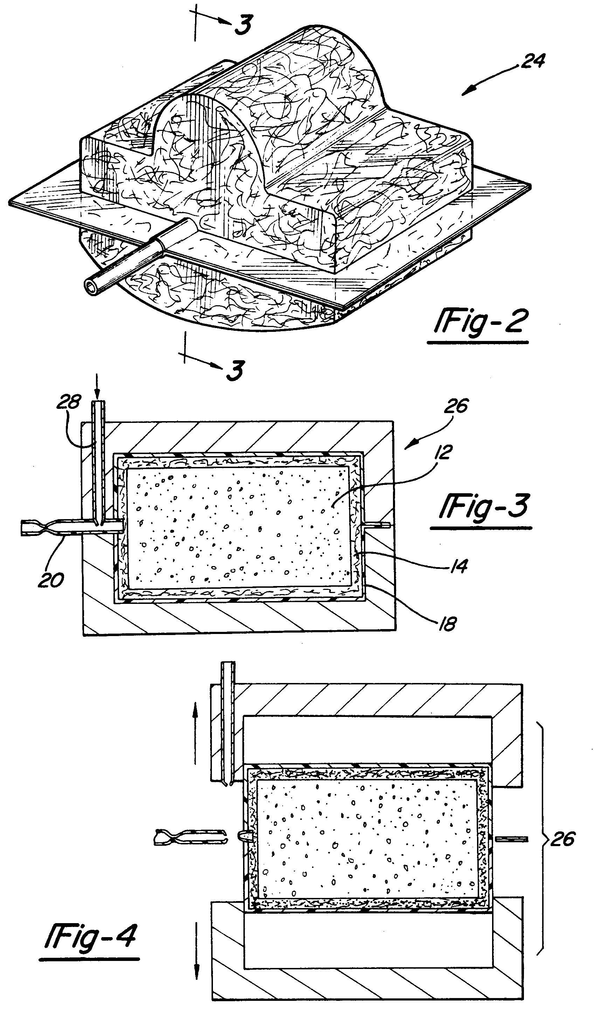

Preform 10 is encapsulated within envelope 16. Envelope 16 is generally made from two flat film sheets 18, but could be preshaped to aid conformability to the preform. Preform 10 is placed between sheets 18. A hollow tube 20 is placed between sheets 18, with one end spaced near fibrous layer 14. Perimeter 22 of sheets 18 are brought together and a vacuum is applied to tube 20. The vacuum partially compresses fibrous layer 14 and partially evacuates the space within envelope 16. Perimeter 22 of sheets 18 is sealed to form encapsulated preform 24 as shown in Figure 2. Sheet 18 may be made from a variety of thin, flexible, air-tight materials, including nylon, polyethylene, silicones, and other multilayer polymeric or metallic films. When using thermoplastic materials for sheet 18, perimeter 22 may be sealed by ultrasonic or heat sealing. Alternatively, adhesives may be used in combination with heat sealing. Various methods of sealing sheets 18 and drawing a vacuum within envelope 16 are known in the vacuum packaging art.

Loose or unbound fibrous material may be retained adjacent core 12 using known vacuum packaging techniques. This permits the manufacture of preform 10 without a binder material in fibrous layer 14. After the application of a vacuum to preform 10 and sealing perimeter 22, tube 20 is also sealed. Tube 20 may be sealed by heat sealing or by a plug (not shown). Encapsulated preform 24 is sealed and preform 10 is protected from contamination or abrasion. Encapsulated preform 24 may be packaged without the need for special liners or separators for subsequent shipping and moulding. The encapsulated preform is believed to greatly facilitate handling and transportation of preforms in the manufacturing process.

When practising the present invention for RTM, encapsulated preform 24 is placed within RTM mould 26. Mould 26 defines a cavity having an interior surface conforming to the shape of a moulded article. Encapsulated preform 24 is placed within mould 26 and mould 26 is closed. Injector nozzle 28 pierces tube 20. A liquid resin material is injected through tube 20 and into fibrous layer 14. The resin completely wets fibrous layer 14 and the interior surface of envelope 16. After the liquid resin material cures, tube 20 and perimeter 22 may be trimmed as desired and finished article 30 removed from mould 26 as illustrated in Figure 4.

Because the liquid resin material never contacts the interior surface of mould 26, mould 26 may be manufactured from a material previously thought unsuitable for RTM. Mould 26 may be made from a porous material such as a fiberglass mat, or from a less expensive metal such as tool steel, zinc alloy, or alluminum which normally react with the resin. Clean-up of the tool after each moulding cycle is also greatly reduced or eliminated. No mould release agent need be applied to the interior of mould 26.

Envelope 16 may be left on finished article 30 or it may alternatively be removed, leaving the resin impregnated preform. Using the encapsulation technique taught by the present invention, various surface finishes, such as graining or matting, may be applied to the final article by embossing the interior facing surfaces of sheet 18. Additionally, sheet 18 may be made from a metal foil and left permanently on finished article 30 to act as a heat deflecting layer.

The preferred embodiments have been described in terms of a resin transfer moulding of a fibrous preform. Other types of moulded articles are possible using the invention taught herein, including thermoplastic injection moulding, compression moulding, and reaction injection moulding. In cases where the polymeric material is not fully cured after the resin injection step, the preform may be transferred to another tool or mould for reshaping and curing.

Preform 10 may be manufactured without tube 20, in which case the vacuum would be drawn between sheets 18 prior to sealing. A resin or other polymeric material may be injected into preform 10 by piercing envelope 16. Alternatively, two or more tubes may be placed within envelope 16 to assist in the transfer of resin to all parts of preform 10. Because preform 10 is packaged under vacuum, it is believed that additional venting is unnecessary during the moulding cycle. Resin may completely fill fibrous layer 14 and need not displace existing gas or fluid. The elimination of vent tubes simplifies the moulding process and reduces the amount of resin needed to mould the finished article.

## Claims

1. A method of producing an encapsulated preform comprising the steps of:
providing a fiber-clad preform (10);
placing said preform in an envelope (16);
evacuating said envelope (16); and
sealing said envelope (16).

2. A method as claimed in claim 1, wherein said envelope comprises at least one air-tight film sheet, said sheet enclosing said preform and sealing said sheet about its perimeter.

3. A method as claimed in claim 1, further comprising placing a hollow member within said envelope and evacuating said envelope through said member.

4. A method as claimed claim 1, wherein said envelope comprises at least two film sheets, said sheets enclosing said preform and sealing the perimeter of said sheets to form said envelope.

5. A method as claimed claim 4, further comprising placing a hollow member between said sheets prior to sealing the perimeter of said sheets, said member communicating between a point external to said envelope and the interior space of said envelope.

6. A method as claimed in claim 5, wherein said sealing step seals said sheet about the periphery of said member and said envelope is evacuated through said member.

7. A method of producing a fiber-reinforced article comprising the steps of:
providing said preform as claimed in any one of the preceding claims and injecting a material into said envelope to impregnate said preform and form said article.

8. A method as claimed in claim 6 and 7, wherein said material is injected through said member and into said preform.

9. A method as claimed in claim 8, wherein at least two hollow members are placed within said envelope and said material is injected through said two or more members.

10. A method as claimed in claim 7, further comprising providing a mould having an internal cavity shaped to receive said preform and placing said envelope within said cavity prior to injecting said material.

11. A moulded article comprising:
a moulding preform having a rigid core and a fiber-reinforcement material overlaid said core;
a fluid-tight envelope closely conforming to the exterior surface of said preform; and
a polymeric material within said fiber-reinforcement material.
